# EUROPÄISCHE PATENTSCHRIFT

(11) **EP 0 963 870 B1**
(45) Veröffentlichungstag und Bekanntmachung des Hinweises auf die Patenterteilung: **26.07.2006**
(21) Anmeldenummer: 99108616.6
(22) Anmeldetag: 10.05.1999
(51) Int. Cl.: B60J 1/02, B60J 10/12

(54) **Kraftfahrzeug mit einem Cabrio-Dach**
Motor vehicle provided with a convertible type roof
Véhicule automobile pourvu d'un toit du type convertible

(30) Priorität: 09.06.1998 DE 19825700
(43) Veröffentlichungstag der Anmeldung: 15.12.1999
(73) Patentinhaber: Volkswagen Aktiengesellschaft, 38436 Wolfsburg (DE)
(72) Erfinder: Pfefferle, Gerhard, 85072 Eichstaett (DE); Ingenlath, Thomas, 38102 Braunschweig (DE); Babel, Andreas, 38553 Wasbüttel (DE); Maciejewski, Berhard, 38518 Gifhorn (DE)

(56) Entgegenhaltungen:
- DE-A- 3 329 406
- DE-A- 19 541 848
- US-A- 4 962 960
- US-A- 5 064 241

## Beschreibung

Die Erfindung betrifft ein Kraftfahrzeug mit einem Cabrio-Dach nach dem Oberbegriff des Anspruchs 1.

Cabriofahrzeuge sind allgemein bekannt. Solche Fahrzeuge sind üblicherweise mit einem Frontfenster ausgerüstet, das einen Frontfensterrahmen mit zwei Rahmenseitenholmen und einem oberen Rahmenquerträger und eine im Fensterrahmen gehaltene Frontscheibe aufweist. Das Cabrio-Dach schließt in seiner geschlossenen Stellung in einem oberen Frontfensterbereich an den oberen Rahmenquerträger an. Dadurch ist sowohl in der geschlossenen als auch geöffneten Stellung des Cabrio-Dachs über dem oberen Fensterscheibenrand der obere Rahmenquerträger sichtbar. Besonders bei breiteren, von vorne sichtbaren Rahmenquerträgern über dem oberen Frontscheibenrand wird ein an sich gewünschter leichter und luftiger Eindruck eines Cabrios gestört und gedrückt, und das Frontfenster wirkt optisch, insbesondere bei geöffnetem Cabrio-Dach, in unerwünschter Weise wie ein Guckkasten.

Um hier eine Verbesserung zu schaffen, ist es bereits bekannt, den oberen Fensterrahmenquerträger mit einem Teilbereich seines Durchmessers im oberen Bereich der Frontscheibe zum Fahrzeuginnenraum hin anzuordnen, so daß der obere Rahmenquerträger nicht mit seiner gesamten Breite über dem oberen Frontscheibenrand liegt. Auch bei diesen bekannten Anordnungen übergreift jedoch ein Teil des oberen Fensterrahmenquerträgers den oberen Frontscheibenrand, so daß auch hier ein die Frontscheibe oben optisch ungünstig einrahmender Querträgerstreifen verbleibt.

Zudem sind bei den vorgenannten Konstruktionen ein erster dichter Anschluß des oberen Frontscheibenrandes an den oberen Fensterrahmenquerträger und in der geschlossenen Cabrio-Dach-Stellung mittels einer weiteren Dichtanordnung ein zweiter dichter Anschluß des vorderen Cabrio-Dachbereichs an den oberen Fensterrahmenquerträger erforderlich, so daß insgesamt zwei dichte Anschlüsse vorzusehen sind.

Aus der US-A-4962960 ist eine Vorrichtung zum Festlegen eines Verdecks eines Kraftfahrzeugs bekannt. Hierbei wird ein Aufbau durch einen Windschutzscheibenrahmen, eine Windschutzscheibe und ein Verdeck gebildet. Das Verdeck liegt an seinem vorderen Rand an einem aufbauseitigen Dichtkörper auf, der sich stets an der Windschutzscheibe befindet.

Aufgabe der Erfindung ist es demgegenüber, ein gattungsgemäßes Kraftfahrzeug mit einem Cabrio-Dach so weiterzubilden, daß Dichtungsanordnungen vereinfachbar sind und zudem verbesserte gestalterische Möglichkeiten vorliegen.

Diese Aufgabe wird mit den kennzeichnenden Merkmalen des Anspruchs 1 gelöst.

Gemäß Anspruch 1 wird der obere Fensterrahmenquerträger im oberen Bereich der Frontscheibe zum Fahrzeuginnenraum hin dergestalt angeordnet, daß er den oberen Frontscheibenrand weder übergreift noch überragt. Das Cabrio-Dach schließt sich in der geschlossenen Stellung mit einem vorderen Dachrand über eine Dichtung an den oberen Frontscheibenrand an.

Der dichte Anschluß des Cabrio-Dachs in der geschlossenen Stellung erfolgt bei einer solchen Ausbildung unmittelbar am oberen Frontscheibenrand, so daß die Frontscheibe nicht in jedem Fall dicht gegenüber dem oberen Rahmenquerträger montiert sein muß, da dieser bei geschlossenem Cabrio-Dach völlig abgedeckt ist. Damit ist nur ein dichter Anschluß zwischen dem Frontscheibenrand und dem Cabrio-Dach erforderlich und es können Dichtanordnungen vereinfacht werden, wobei konstruktive Freiräume für die Scheibenhalterung und Scheibenmontage entstehen.

Da der obere Rahmenquerträger den oberen Frontscheibenrand weder übergreift noch überragt, wird ein ansprechender und leichter Eindruck der Frontfensterpartie ohne obere Frontscheibeneinrahmung erreicht. Dieser Eindruck kann dadurch verstärkt werden, daß ein oberes Querband der Frontscheibe in an sich bekannter Weise durch eine Einfärbung oder durch Farbpunkte zumindest in der Breite des dahinterliegenden Fensterrahmenquerträgers etwas abgedunkelt ausgeführt ist. Damit ist der obere Fensterrahmenquerträger weder von vorne und bei einer Querbiegung der Frontscheibe auch von der Seite des Fahrzeugs her nicht oder kaum mehr sichtbar. Damit entsteht der Eindruck, daß die Frontscheibe lediglich zwischen den Rahmenseitenholmen frei nach oben abstehend gehalten ist, obwohl für eine hohe Stabilität tatsächlich ein oberer Fensterrahmenquerträger verwendet ist.

Bevorzugt wird ein Anschluß des Cabrio-Dachs außenhautbündig mit der Frontscheibe vorgeschlagen, so daß die Dichtung am Frontscheibenrand unmittelbar über die obere Schmalseite der Frontscheibe erfolgt oder zumindest nur eine geringe Außenkantenüberdeckung durch eine Dichtung erfolgt.

Erfindungsgemäß liegt der obere Frontscheibenrand bzw. die obere Schmalseite der Frontscheibe bei geöffnetem Cabrio-Dach frei und die Dichtung ist dachseitig als Dichtungsband am vorderen Dachrand angebracht. Beim Schließen des Cabrio-Dachs wird dann die dachseitige Dichtung für einen dichten Anschluß an den Frontscheibenrand angepreßt.

In einer zweiten Ausführungsform einer Dichtungsanordnung liegt ebenfalls der obere Frontscheibenrand bzw. die obere Schmalseite der Frontscheibe bei geöffnetem Cabrio-Dach frei. Die Dichtung ist als versenktes Dichtungsband in einer karosserieseitigen Querkassette enthalten, die vorzugsweise im oberen Fensterrahmenquerträger integriert ist. Beim Schließen des Cabrio-Dachs fährt die versenkte Dichtung durch einen Antrieb in eine Funktionsstellung an den oberen Fensterscheibenrand aus. Dieser Antrieb ist vorteilhaft mit dem Schließmechanismus des Cabrio-Dachs gekoppelt. Damit wird erreicht, daß bei geöffnetem Cabrio-Dach die Dichtung in eine nicht einsehbare Position versenkt ist und erst beim Schließen des Cabrio-Dachs in ihre Funktionsstellung ausfährt. Dem Fachmann stehen dazu bekannte und bewährte Antriebe, wie beispielsweise elektrische, hydraulische und/oder pneumatische Antriebe zur Verfügung.

Anhand einer Zeichnung werden Ausführungsbeispiele der Erfindung näher erläutert.

Es zeigen:
- Fig. 1: eine schematische, perspektivische Darstellung eines Kraftfahrzeugs mit einem Cabrio-Dach,
- Fig. 2: eine schematische Darstellung eines mit einer dachseitigen Dichtung versehenen Cabrio-Dachs in Schließstellung,
- Fig. 3: eine schematische Darstellung einer in einem oberen Fensterrahmenquerträ ger versenkbaren Dichtung in deren Übergang von der Versenkstellung in die Ausfahrstellung,
- Fig. 4: eine schematische Darstellung der versenkbaren Dichtung der Fig. 3 in deren Ausfahrstellung bei geschlossenem Cabrio-Dach und
- Fig. 5: eine schematische Darstellung einer auf dem oberen Frontscheibenrand gehaltenen Dichtung bei geschlossenem Cabrio-Dach nach dem Stand der Technik.

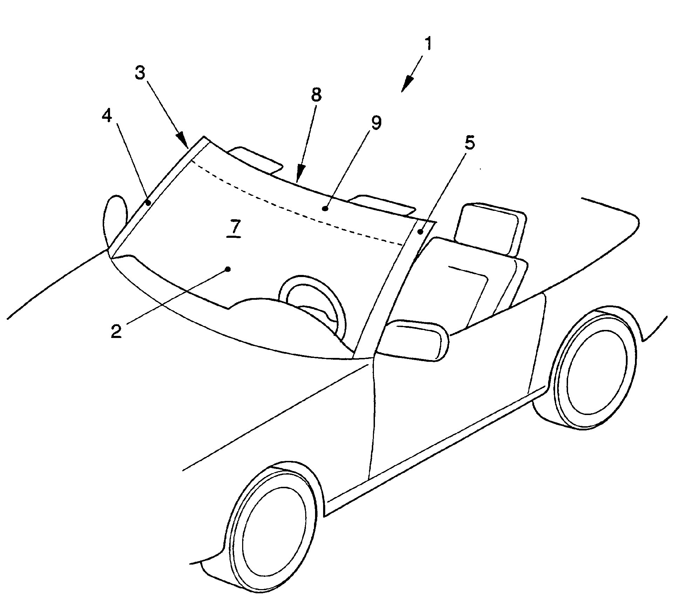

In der Fig. 1 ist ein Cabriolet-Fahrzeug 1 schematisch und perspektivisch dargestellt. Das Cabriolet 1 weist ein Frontfenster 2 mit einem Frontfensterrahmen 3 auf, der aus seitlich angeordneten Rahmenseitenholmen 4, 5 sowie einem in der Fig. 1 nicht sichtbaren oberen Rahmenquerträger 6 besteht.

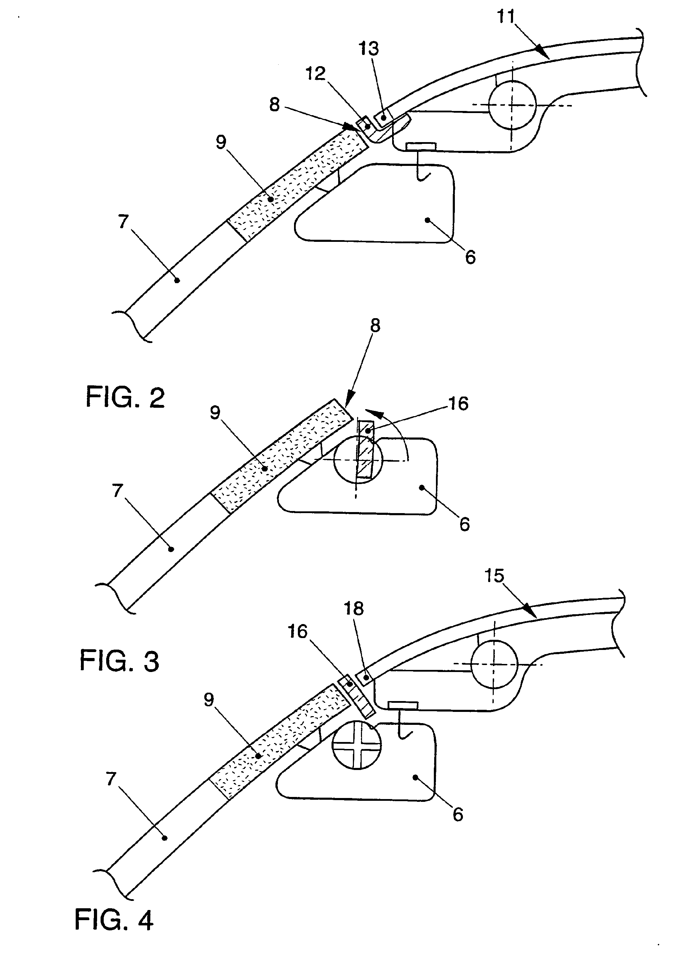

In diesem Frontfensterrahmen 3 ist eine Frontscheibe 7 gehalten, wobei der obere Fensterrahmenquerträger 6, wie dies in den Fig. 2 bis 5 dargestellt ist, im oberen Bereich der Frontscheibe 7 zum Fahrzeuginnenraum hin so angeordnet ist, daß er den oberen Frontscheibenrand 8 weder übergreift noch nach oben überragt. Dadurch wird ein ansprechender und leichter Eindruck der Frontfensterpartie ohne obere Frontscheibeneinrahmung erreicht, der noch dadurch verstärkt werden kann, daß ein oberes Querband 9 der Frontscheibe 7, wie dies in der Fig. 1 strichliert und in den Fig. 2 bis 5 gepunktet eingezeichnet ist, durch eine Einfärbung oder durch Farbpunkte wenigstens in der Breite des dahinterliegenden Fensterrahmenquerträgers 6 abgedunkelt ausgeführt ist. Damit wird erreicht, daß der obere Fensterrahmenquerträger 6 weder von vorne und bei einer entsprechenden Querbiegung der Frontscheibe 7 auch von der Seite des Fahrzeugs her nicht oder kaum mehr sichtbar ist. Es entsteht dadurch der Eindruck, daß die Frontscheibe lediglich zwischen den seitlichen Rahmenseitenholmen 4, 5 des Frontfensterrahmens 3 frei nach oben abstehend gehalten ist, während jedoch für eine erforderliche hohe Stabilität tatsächlich ein oberer Fensterrahmenquerträger 6 verwendet ist.

Ein Cabrio-Dach 11 schließt in einer nach Fig. 2 ersten Ausführungsform über eine Dichtung 12 außenhautbündig an den oberen Frontscheibenrand 8 der Frontscheibe 7 an. Die Dichtung 12 ist im Ausführungsbeispiel der Fig. 2 dachseitig als Dichtungsband am vorderen Cabrio-Dachrand 13 angebracht, so daß bei geöffnetem Cabrio-Dach 11 der obere Frontscheibenrand 8 frei ist und, wie in der Fig. 2 dargestellt, bei geschlossenem Cabrio-Dach 11 die dachseitige Dichtung 12 für einen dichten Anschluß an den Frontscheibenrand 8 angepreßt wird.

In einer zweiten Ausführungsform einer Dichtungsanordnung, die in den Fig. 3 und 4 dargestellt ist, liegt der obere Frontscheibenrand 8 bei geöffnetem Cabrio-Dach 15 ebenfalls frei, während die Dichtung 16 als versenktes Dichtungsband in den oberen Fensterrahmenquerträger 6 integriert ist. Wie dies in der Fig. 3 dargestellt ist, fährt beim Schließen des Cabrio-Dachs 15 die in dem oberen Fensterrahmenquerträger 6 versenkte Dichtung 16 durch einen mit dem Schließmechanismus des Cabrio-Dachs 15 gekoppelten Antrieb aus ihrer Versenkstellung im oberen Fensterrahmenquerträger 6 in die in der Fig. 4 dargestellte Ausfahr- und Funktionsstellung 17 aus. Bei geschlossenem Cabrio-Dach 15 wird die Dichtung 16 dann durch einen Cabrio-Dachrand 18 an den oberen Frontscheibenrand 8 gepreßt.

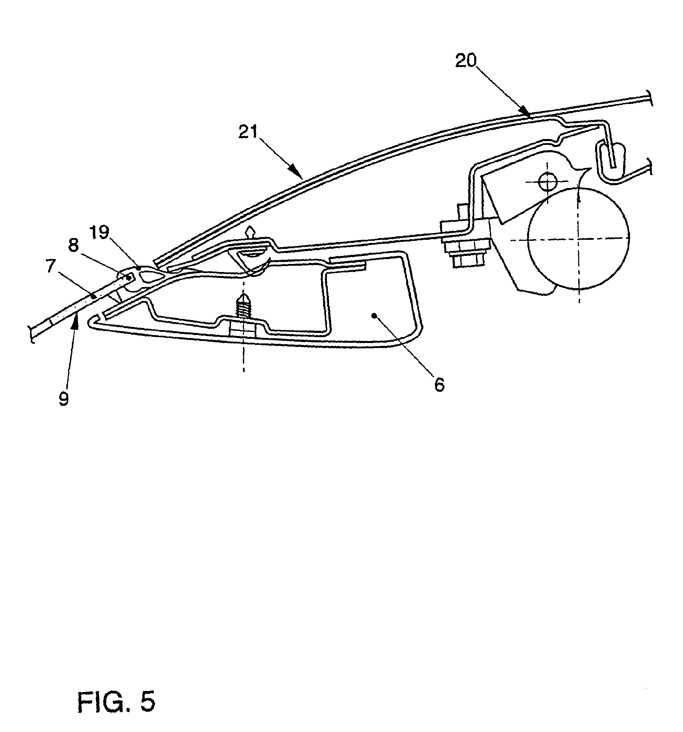

In einer Ausführungsform einer Dichtungsanordnung nach dem Stand der Technik, wie sie in der Fig. 5 dargestellt ist, wird eine Dichtung 19 als schmales Dichtungsband unmittelbar ständig auf dem oberen Fensterscheibenrand 8 gehalten. Ein Cabrio-Dachrand 21 eines Cabrio-Dachs 20 schließt in der in der Fig. 5 dargestellten Geschlossenstellung des Cabrio-Dachs 20 unmittelbar an die Dichtung 19 an. Eine zusätzliche Dichtung zwischen dem oberen Rahmenquerträger 6 und dem Cabrio-Dach 20 ist nicht erforderlich.

## Patentansprüche

1. Kraftfahrzeug mit einem Cabrio-Dach, wobei ein Frontfenster (2) des Kraftfahrzeugs einen Frontfensterrahmen (3) mit zwei Rahmenseitenholmen (4, 5) und einem oberen Rahmenquerträger (6) und eine im Froutfensterrahmen gehaltene Frontscheibe (7) mit einem oberen Frontscheibenrand (8) aufweist, und das Cabrio-Dach in einer geschlossenen Stellung im oberen Frontfensterbereich anschließt, wobei der obere Rahmenquerträger (6) im oberen Bereich der Frontscheibe (7) zum Fahrzeuginnenraum hin dergestalt angeordnet ist, daß er den oberen Frontscheibenrand (8) weder übergreift noch nach oben überragt und daß das Cabrio-Dach (11; 15; 20) in der geschlossenen Stellung mit einem vorderen Dachrand (13; 18; 21) über eine Dichtung (12; 16; 19) an den oberen Frontscheibenrand (8) anschließt, **dadurch gekennzeichnet, daß** der obere Frontscheibenrand (8) bei geöffnetem Cabrio-Dach (11) ohne Dichtung freiliegt.

2. Kraftfahrzeug mit einem Cabrio-Dach nach Anspruch 1, **dadurch gekennzeichnet, daß** der Anschluß des Cabrio-Dachs (11; 15; 20) außenhautbündig mit der Frontscheibe (7) erfolgt.

3. Kraftfahrzeug mit einem Cabrio-Dach nach Anspruch 1 oder Anspruch 2, **dadurch gekennzeichnet, daß** ein oberes Querband (9) der Frontscheibe (7) abdunkeind ausgeführt ist und das Querband (9) wenigstens die Breite des dahinterliegenden Fensterrahmenquerträgers (6) aufweist.

4. Kraftfahrzeug mit einem Cabrio-Dach nach einem der Ansprüche 1 bis 3, **dadurch gekennzeichnet daß** die Dichtung (12) dachseitig als Dichtungsband am vorderen Dachrand (13) angebracht ist.

5. Kraftfahrzeug mit einem Cabrio-Dach nach einem der Ansprüche 1 bis 4, **dadurch gekennzeichnet, daß** eine in einer karosserieseitigen Querkassette, vorzugsweise dem oberen Fensterrahmenquerträger (6) versenkte Dichtung (16) als Dichtungsband beim Schließen des Cabrio-Dachs (15) durch einen Antrieb in eine Funktionsstellung an den oberen Frontscheibenrand (8) ausfährt.

6. Kraftfahrzeug mit einem Cabrio-Dach nach Anspruch 5, **dadurch gekennzeichnet, daß** der Antrieb für das Dichtungsband (16) mit dem Schließmechanismus des Cabrio-Dachs (15) gekoppelt ist.

## Claims

1. Motor vehicle provided with a convertible-type roof, a front window (2) of the motor vehicle having a front window frame (3) with two frame side struts (4, 5) and an upper frame crossmember (6) and a windscreen (7), which is held in the front window frame and has an upper windscreen edge (8), and, in a closed position, the convertible-type roof adjoining in the upper front window region, the upper frame crossmember (6) being arranged in the upper region of the windscreen (7) towards the vehicle interior in such a manner that it neither engages over nor protrudes upwards over the upper windscreen edge (8), and in that, in the closed position, the convertible-type roof (11; 15; 20) adjoins the upper windscreen edge (8) by means of a front roof edge (13; 18; 21) via a seal (12; 16; 19), **characterized in that**, when the convertible-type roof (11) is open, the upper windscreen edge (8) is exposed without the seal.

2. Motor vehicle provided with a convertible-type roof according to Claim 1, **characterized in that** the convertible-type roof (11; 15; 20) is connected to the windscreen (7) flush with the outer skin.

3. Motor vehicle provided with a convertible-type roof according to Claim 1 or Claim 2, **characterized in that** an upper transverse band (9) of the windscreen (7) is of darkened design, and the transverse band (9) has at least the width of the window frame crossmember (6) which is situated behind it.

4. Motor vehicle provided with a convertible-type roof according to one of Claims 1 to 3, **characterized in that** the seal (12) on the roof side is attached to the front roof edge (13) as a sealing band.

5. Motor vehicle provided with a convertible-type roof according to one of Claims 1 to 4, **characterized in that** a seal (16), which is recessed in a transverse cassette on the vehicle body, preferably in the upper window frame crossmember (6), and is in the form of a sealing band, extends, by means of a drive during the closure of the convertible-type roof (15), into a functional position on the upper windscreen edge (8).

6. Motor vehicle provided with a convertible-type roof according to Claim 5, **characterized in that** the drive for the sealing band (16) is coupled to the closing mechanism of the convertible-type roof (15).

## Revendications

1. Véhicule automobile avec un toit convertible, dans lequel une fenêtre avant (2) du véhicule automobile présente un cadre de fenêtre avant (3) avec deux longerons latéraux de cadre (4, 5) et un support supérieur transversal de cadre (6) et une vitre avant (7) maintenue dans le cadre de fenêtre avant, avec un bord supérieur de vitre avant (8), et le toit convertible se raccorde dans une position fermée dans la région supérieure de la fenêtre avant, le support supérieur transversal de cadre (6) étant disposé dans la région supérieure de la vitre avant (7) vers l'intérieur du véhicule, de telle sorte qu'il ne dépasse pas du bord supérieur de vitre avant (8) et qu'il ne dépasse pas non plus vers le haut, et que le toit convertible (11 ; 15 ; 20) se raccorde dans la position fermée par un bord de toit avant (13 ; 18 ; 21) par le biais d'une garniture d'étanchéité (12 ; 16 ; 19) au bord supérieur de vitre avant (8), **caractérisé en ce que** le bord supérieur de vitre avant (8) est exposé sans garniture d'étanchéité lorsque le toit convertible (11) est ouvert.

2. Véhicule automobile avec un toit convertible selon la revendication 1, **caractérisé en ce que** le raccordement du toit convertible (11 ; 15 ; 20) s'effectue en affleurement de la peau extérieure avec la vitre avant (7).

3. Véhicule automobile avec un toit convertible selon la revendication 1 ou 2, **caractérisé en ce qu'**une bande transversale supérieure (9) de la vitre avant (7) est réalisée de manière assombrie et la bande transversale (9) présente au moins la largeur du support transversal de cadre de fenêtre (6) situé derrière.

4. Véhicule automobile avec un toit convertible selon l'une quelconque des revendications 1 à 3, **caractérisé en ce que** la garniture d'étanchéité (12) est montée du côté du toit sous forme de bande d'étanchéité au niveau du bord de toit avant (13).

5. Véhicule automobile avec un toit convertible selon l'une quelconque des revendications 1 à 4, **caractérisé en ce qu'**une garniture d'étanchéité (16) renfoncée dans une cassette transversale du côté de la carrosserie, de préférence le support transversal supérieur de cadre de fenêtre (6), servant de bande d'étanchéité, est sortie lors de la fermeture du toit convertible (15) par un entraînement dans une position fonctionnelle sur le bord supérieur de vitre avant (8).

6. Véhicule automobile avec un toit convertible selon la revendication 5, **caractérisé en ce que** l'entraînement pour la bande d'étanchéité (16) est accouplé au mécanisme de fermeture du toit convertible (15).
